(19) **Europäisches Patentamt**

**European Patent Office**

**Office européen des brevets**

(11) **EP 0 702 216 B1**

(12) **EUROPEAN PATENT SPECIFICATION**

(45) Date of publication and mention
of the grant of the patent:
**11.10.2000 Bulletin 2000/41**

(51) Int. Cl.7: **G01F 23/36**

(21) Application number: **95112528.5**

(22) Date of filing: **09.08.1995**

(54) **Liquid level sender device**

Flüssigkeitsniveaugeber

Dispositif de transmission pour indicateurs du niveau de liquide

(84) Designated Contracting States:
**DE FR GB**

(30) Priority: **27.08.1994 GB 9417331**

(43) Date of publication of application:
**20.03.1996 Bulletin 1996/12**

(73) Proprietors:
• **FORD MOTOR COMPANY LIMITED**
**Brentwood Essex (GB)**
Designated Contracting States:
**GB**
• **Ford-Werke Aktiengesellschaft**
**50735 Köln (DE)**
Designated Contracting States:
**DE**

• **FORD FRANCE SOCIETE ANONYME**
**92506 Rueil Malmaison Cedex (FR)**
Designated Contracting States:
**FR**

(72) Inventor:
**Bacon, Donald Richard Grant**
**Chelmsford, Essex CM1 3BS (GB)**

(74) Representative:
**Messulam, Alec Moses et al**
**A. Messulam & Co. Ltd.,**
**43-45 High Road**
**Bushey Heat, Herts WD2 1EE (GB)**

(56) References cited:
**EP-A- 0 403 391      EP-A- 0 483 001**
**DE-A- 4 035 321      DE-A- 4 409 554**
**DE-C- 3 310 704**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a liquid level sender device for monitoring the volume of liquid contained in a liquid vessel, and particularly, but not exclusively for monitoring the volume of fuel in the fuel tank of a motor vehicle.

Fuel level sender devices are conventionally mounted in their respective fuel tanks, the function of the device being to monitor the volume of fuel within the fuel tank at any time. Conventional systems comprise a float at an end of a float arm which floats on the fuel within the tank, and a contact at an opposite end of the float arm which travels across a resistance track in a known manner. The electrical resistance of the track corresponds to the position of the contact upon it.

Current practice within the motor industry is to use moulded fuel tanks, typically manufactured from plastics materials. These are favoured because of the inherent savings in materials and manufacturing costs, but have the additional benefit of savings in weight when compared to metal fuel tanks.

A problem that has developed with these types of fuel tank is that the materials from which they are manufactured have properties which tend to result in the tank deforming when in either the full or empty condition. The properties of plastics materials from which the fuel tanks are manufactured may change as a result of absorption of fuels such as petrol or methanol, variations in manufacturing tolerances or the ageing of the plastics material with time, and may result in a permanent deformation of the walls of the fuel tank.

Alternatively, the deformation of the walls of the fuel tank may be due to instantaneous factors such as the pressure within the tank, or changes in the external ambient conditions.

This variation in the position of the walls of the tank can cause the position of the float relative to the top wall of the fuel tank to vary according to the position of the bottom wall of the fuel tank. This may result in an inaccurate indication of the volume of liquid remaining in the fuel tank being indicated to the driver of the vehicle.

According to the present invention there is provided a liquid level sender device comprising a bracket adapted to be mounted relative to a first wall of a liquid vessel, a float moveable relative to the bracket in accordance with the liquid level in the vessel and having means for cooperating with a first resistance the value of which changes as the float moves, and a moveable compensation arm biassed against a second wall opposite the first wall and adapted to follow the movement of the second wall of the vessel and having means for cooperating with a second resistance the value of which changes as the compensation arm moves, and means responsive to the instantaneous values of the first and second resistances to produce an output corresponding to the volume of liquid remaining in the vessel.

The float preferably extends from a float arm which will rise and fall according to the volume of liquid within the liquid vessel to cause the electrical resistance of the first resistance to correspond to the position of the float relative to the level of liquid within the liquid vessel.

The second wall of the liquid vessel may flex in use, depending upon the volume of liquid contained in the vessel, and upon the internal pressure within the vessel which may vary with changes in the external ambient conditions. The deformation of the second wall of the liquid vessel will result in a corresponding movement of the compensation arm. The compensation arm is therefore biassed against the second wall of the liquid vessel, so that any variation in the position of the second wall of the liquid vessel will result in a corresponding movement of the compensation arm.

In the preferred form the first and second resistances will be connected electrically in parallel to form a resistance network. The resistance network may be connected electrically in series with a biassing resistor which allows a reference resistance value to be varied by assembly or service personnel to allow the liquid level sender device to be calibrated.

The float arm and the compensation arm are preferably pivoted on a bracket depending from a wall of the liquid vessel.

However, in an alternative embodiment of the invention the float arm and the compensation am are slideably moveable relative to the bracket.

The device may have a float at the end of the float arm, and a contact which travels along a resistance track in a known manner. The compensation arm may also be vertically slideable.

When the second wall of the vessel is a lower wall, the compensation arm may be biassed against the second wall of the liquid vessel due to its own weight. Preferably however the compensation arm is biassed against the second wall of the vessel by a spring.

The first and second variable resistances may be potentiometers. In the preferred form each potentiometer will comprise a resistance track and a contact, the contact being biassed against the resistance track and the electrical resistance of the potentiometer being adapted to correspond to the position of the contact on the resistance track.

The present invention will now be further described, by way of example, with reference to the accompanying drawings where;

    Figures 1 to 3 are schematic views of a fuel tank and liquid level sender device in accordance with the invention;

    Figure 4 shows a perspective view of a float and float arm;

    Figure 5 shows a resistance track; and

Figure 6 shows a schematic view of the electrical circuit.

For convenience the following description of the invention will be in terms of a fuel level sender device mounted in the fuel tank of a motor vehicle.

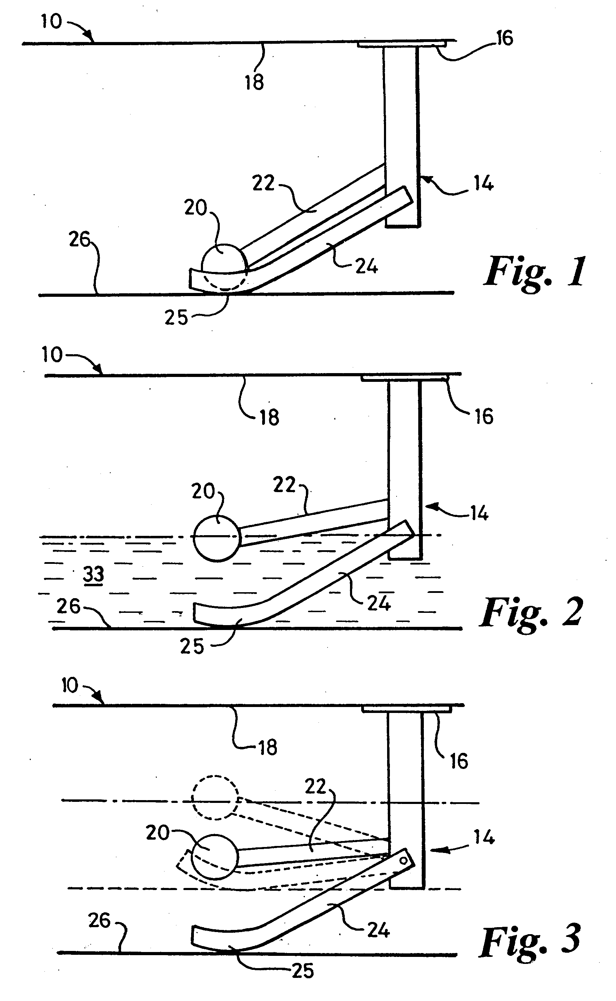

Figures 1 to 3 show a plastics fuel tank 10, and a liquid level sender device 14 mounted internally in the tank 10.

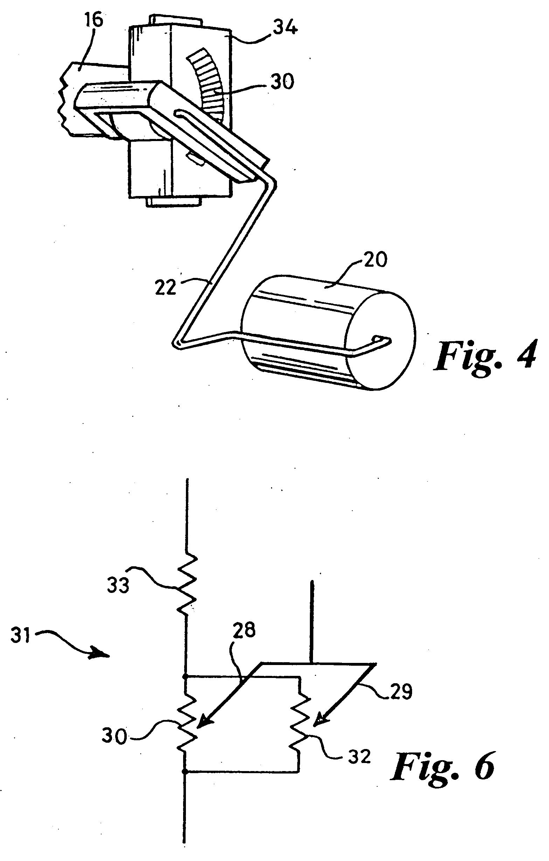

The liquid level sender device 14 comprises a float 20 at an end of a float arm 22, and a foot 25 at an end of a compensation arm 24. The float arm 22 and the compensation arm are each pivotally connected to a bracket 16 which includes a housing 34 (as shown in Figure 4) and which is mounted to the top wall 18 of the tank 10.

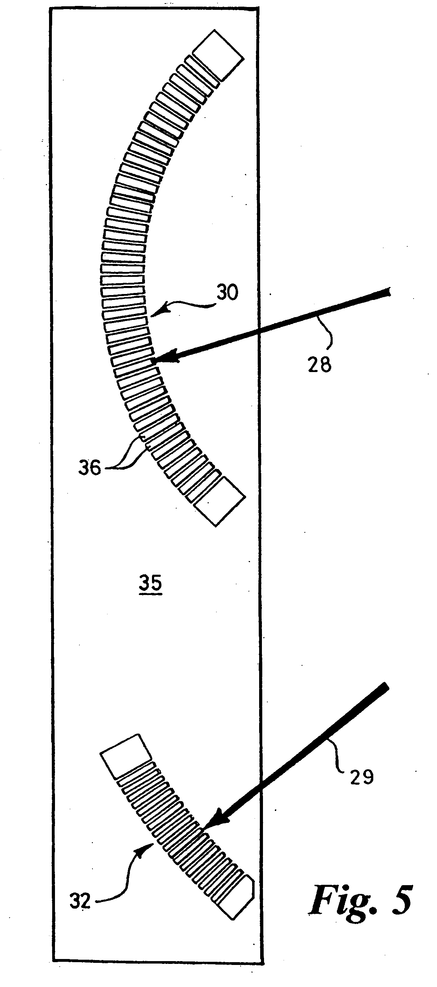

The float arm 22 and the compensation arm 24 have, at their ends remote from the float 20 and the foot 25 respectively, contacts 28 and 29 as shown in Figures 5 and 6. The contacts 28 and 29 travel across resistance tracks 30 and 32 in the housing 34.

The compensation arm 24 is biased against the bottom wall 16 of the fuel tank 10 by means of a spring (not shown), which ensures that the position of the foot 25 always corresponds to the position of the bottom wall 16. Each resistance track 30 and 32 has a plurality of resistance elements 36 formed on the surface of a board 35. The electrical resistance of the resistance tracks 30 and 32 at any instant corresponds to the sum of the resistances of the elements 36 between an end of the track and the contact 28 or 29, and so as the contact 28 or 29 travels along the track the resistance of the track either increases or decreases.

The resistance tracks 30 and 32 are connected electrically in parallel (as shown in Figure 6), and form a resistance network 31 which is connected electrically in series with a biassing resistor 33. The resistance network 31, and biassing resistor 33 may be mounted integrally within a gauge or indication device.

The operation of the device will now be described.

Figure 1 shows the fuel tank 10 initially in an empty condition. Introduction of fuel 33 into the tank 10 will cause the float 20 to rise (Figure 2). The position of the float arm 22 is dependent upon the volume of fuel 33 within the tank 10.

The position of the bottom wall 26 of the tank 10 relative to the top wall 18 may change. For example the bottom wall will be forced away from the top wall if there is an increase in the internal pressure of the tank. The result of such a change will be that the position of the top surface of the fuel 33 will be lower than would be the case if the tank bottom wall position had not changed.

The solid lines shown in Figure 3 indicate the relative positions of the float arm 22 and compensation arm 24 for a partially filled fuel tank 10 without deformation of the bottom wall 26 and with the compensation arm 24 biased against the bottom wall 26.

When the bottom wall 26 of the fuel tank 10 bows inwardly, it causes the level of the fuel 33 in the tank 10 to rise accordingly, and the float 20 and float arm 22 will be driven upwardly as indicated by the broken lines. As can clearly be seen by comparing Figures 2 and 3, although an equivalent volume of fuel 33 is contained in the tank 10, the float 20 and float arm 22 in the latter situation would give an indication that the fuel tank 10 contained a volume of fuel 33 much greater than that contained in the tank shown in Figure 2.

To compensate for this incorrect indication, a compensating signal is given by the compensation arm which indicates the instantaneous position of the tank floor. When the bottom wall 16 of the tank 10 flexes or bows, the corresponding movement of the compensation arm 24 causes the contact 29 to travel along the resistance track 32. The electrical resistance of each of the resistance tracks 30 and 32, will correspond to the positions of the contacts 28 and 29 respectively. The position of each contact 28 and 29 will in turn correspond to the relative positions of the float arm 22 and compensation arm 24. As the resistance tracks 30 and 32 are connected electrically in parallel (as shown in Figure 6), the resulting change in the resistance of the resistance network 31 will be equivalent to the result of the equation

$$R_t = R_b + \cfrac{1}{\left[\left(\dfrac{1}{R_f}\right)+\left(\dfrac{1}{R_c}\right)\right]}$$

where $R_t$ is the total resistance of the network 31, $R_b$ is the value of biassing resistor 33 placed electrically in series with the tracks 30 and 32 which are arranged in parallel, $R_f$ is the resistance corresponding to the position of the contact 28 of float arm 22 on the resistance track 30, and $R_c$ is the resistance corresponding to the position of the contact 29 of compensation arm 24 on the resistance track 32.

The invention therefore provides a simple and accurate device for indicating the volume of fuel within a fuel tank irrespective of any distortion of the tank which may result from varying external ambient conditions, and internal pressures within the fuel tank.

Although the invention has been described in terms of a liquid level sender device 14 which has pivoted float and compensation arms 22 and 24, the invention is not limited to this design. It will be obvious to the skilled man that the invention may be effectively applied to liquid level sender devices where one or both of the float arm 22 and/or compensation arm 24 are slideably mounted.

## Claims

1. A liquid level sender device comprising a bracket (16) adapted to be mounted relative to a first wall (18) of a liquid vessel (10), a float (20) moveable relative to the bracket in accordance with the liquid level in the vessel and having means (28) for cooperating with a first resistance (30) the value of which changes as the float moves, and a moveable compensation arm (24) biased against a second wall (26) opposite the first wall (18) and adapted to follow the movement of the second wall of the liquid vessel and having means (29) for cooperating with a second resistance (32) the value of which changes as the compensation arm moves, and means responsive to the instantaneous values of the first and second resistances to produce an output corresponding to the volume of liquid remaining in the vessel.

2. A device according to Claim 1, wherein the float (20) is mounted on a float arm (22) which is pivoted relative to the bracket (16).

3. A device according to Claim 1 or Claim 2, wherein the compensation arm (24) is pivoted relative to the bracket (16).

4. A device according to any one of Claims 1 to 3, wherein the compensation arm (24) is biased against the second wall of the liquid vessel by a spring.

5. A device according to Claim 1, wherein the first and second resistances (30, 32) are potentiometers.

6. A device according to Claim 5, wherein each potentiometer comprises a resistance track and a contact, the contact being biased against the resistance track and the electrical resistance of the potentiometer being adapted to correspond to the position of the contact on the resistance track.

## Patentansprüche

1. Eine Flüssigkeitsniveau-Sendervorrichtung bestehend aus einem Träger (16), der geeignet ist, um im Verhältnis zu einer ersten Wand (18) eines Flüssigkeitsbehälters (10) montiert zu werden, einem Schwimmer (20), der im Verhältnis zum Winkelstück je nach dem Flüssigkeitsniveau im Behälter bewegbar ist und der eine Vorrichtung (28) hat, um mit einem ersten Widerstand (30) zusammenzuwirken, dessen Wert sich nach der Bewegung des Schwimmers ändert und einem bewegbaren Ausgleicharm (24), der gegen eine zweite Wand (26) gegenüber der ersten Wand (18) beansprucht ist und geeignet ist, um der Bewegung der zweiten Wand des Flüssigkeitsbehälters zu folgen und der eine Vorrichtung (29) hat, um mit einem zweiten Widerstand (32) zusammenzuwirken, dessen Wert sich nach der Bewegung des Ausgleicharms ändert und einer Vorrichtung, die auf die instanten Werte des ersten und zweiten Widerstands anspricht, um eine Abgabe zu erzeugen, die dem im Behälter verbleibenden Flüssigkeitsniveau entspricht.

2. Eine Vorrichtung nach Anspruch 1, in der der Schwimmer (20) auf einen Schwimmerarm (22) montiert ist, der im Verhältnis zum Träger oder Winkelstück (16) ausgeschwenkt ist.

3. Eine Vorrichtung nach Anspruch 1 oder 2, in der der Ausgleicharm (24) im Verhältnis zum Winkelstück (16) ausgeschwenkt ist.

4. Eine Vorrichtung nach irgendeinem der Ansprüche 1 bis 3, in der der Ausgleicharm (24) durch eine Feder schräg gegen die zweite Wand des Flüssigkeitsbehälters gestellt ist.

5. Eine Vorrichtung nach Anspruch 1, in der der erste und der zweite Widerstand (30, 32) Potentiometer sind.

6. Eine Vorrichtung nach Anspruch 5, in der jeder Potentiometer eine Widerstandslaufbahn und einen Kontakt enthält, wobei der Kontakt schräg gegen die Widerstandslaufbahn gestellt ist und der elektrische Widerstand des Potentiometers geeignet ist, um der Stellung des Kontakts auf der Widerstandslaufbahn zu entsprechen.

## Revendications

1. Dispositif de transmission de niveau de liquide comprenant un support (16) conçu pour être monté par rapport à une première paroi (18) d'un récipient de liquide (10), un flotteur (20) mobile par rapport au support suivant le niveau de liquide dans le récipient et comportant un moyen (28) destiné à coopérer avec une première résistance (30) dont la valeur varie lorsque le flotteur se déplace, et un bras de compensation mobile (24) sollicité contre une seconde paroi (26) opposée à la première paroi (18) et conçu pour suivre le déplacement de la seconde paroi du récipient de liquide et comportant un moyen (29) destiné à coopérer avec une seconde résistance (32) dont la valeur varie lorsque le bras de compensation se déplace, et un moyen sensible aux valeurs instantanées des première et seconde résistances afin de produire une sortie correspondant au volume du liquide restant dans le récipient.

2. Dispositif selon la revendication 1, dans lequel le flotteur (20) est monté sur un bras de flotteur (22) qui est amené à pivoter par rapport au support (16).

3. Dispositif selon la revendication 1 ou la revendication 2, dans lequel le bras de compensation (24) est amené à pivoter par rapport au support (16).

4. Dispositif selon l'une quelconque des revendications 1 à 3, dans lequel le bras de compensation (24) est sollicité contre la seconde paroi du récipient de liquide par un ressort.

5. Dispositif selon la revendication 1, dans lequel les première et seconde résistances (30, 32) sont des potentiomètres.

6. Dispositif selon la revendication 5, dans lequel chaque potentiomètre comprend une piste de résistance et un contact, le contact étant sollicité contre la piste de résistance et la résistance électrique du potentiomètre étant conçue pour correspondre à la position du contact sur la piste de résistance.

*Fig. 1*

*Fig. 2*

*Fig. 3*

*Fig. 4*

*Fig. 6*

7

*Fig. 5*